# EUROPEAN PATENT SPECIFICATION

(11) **EP 1 825 934 B1**
(45) Date of publication and mention of the grant of the patent: **05.12.2012**
(21) Application number: 07380043.5
(22) Date of filing: 20.02.2007
(51) Int. Cl.: B21D 24/16, B21D 22/02

(54) **Method for forming a metal sheet**
Verfahren zum Umformen eines Metallblechs
Procédé de formage d'une feuille métallique

(30) Priority: 24.02.2006 ES 200600437
(43) Date of publication of application: 29.08.2007
(73) Proprietor: MONDRAGON UTILLAJE Y SISTEMAS, S. Coop., 48170 Zamudio (Bizkaia) (ES)
(72) Inventor: Erdocia Gallastegui, Andoni, 20560 Oñati (Gipuzkoa) (ES); Barañano Cenicacelaya, Luis, 48200 Durango (Bizkaia) (ES); Ugartemendia Arregui, Jose Cruz, 48100 Mungia (Bizkaia) (ES); Sanz Gil, Agustín, 48990 Getxo (Bizkaia) (ES)
(74) Representative: Igartua, Ismael

(56) References cited:
- DE-A1- 3 218 923
- JP-A- 5 007 944
- JP-A- 7 178 474
- US-A1- 2005 257 862

## Description

### TECHNICAL FIELD

The present invention relates to a method for hot-forming a metal sheet according to the preamble of claim 1 or 2.

### PRIOR ART

Tools for forming a metal sheet that comprise at least one upper former and at least one bottom former are known, said formers comprising the shape of the piece that is going to be obtained by forming said metal sheet, as is disclosed, for example, in the document EP900603A1. The metal sheet is disposed between the two formers and is pressed between said formers, said metal sheet being formed.

Due to the properties of some materials, some metal sheets are hot-formed, said metal sheets being disposed at high temperatures between the formers. US20040103709A1, for example, discloses a cooled former used to hot-form metal sheets. Document US20050257862A1, for example, discloses the use of cooled formers for forming a metal sheet, so that when a metal sheet is hot-formed by said formers, said metal sheet is cooled by the formers themselves.

Once the metal sheet has been hot-formed and cooled by the cooled formers, the formed metal sheet part (the required piece) is separated from the rest of said metal sheet during at least one subsequent phase by cutting means that may, for example, comprise a laser.

JP05007944A discloses a tool for forming a metal sheet, that comprises an upper former with a forming surface and a bottom former with a forming surface between which is disposed a metal sheet, said metal sheet being pressed between said formers in order to be formed, a formed area and a residual area being obtained on said metal sheet during said forming. Said tool comprises actuating means which are fixed to the formers and comprise projections for generating complete cuts in the metal sheet.

### DISCLOSURE OF THE INVENTION

It is an object of the invention to provide a method for hot-forming a metal sheet. This object is achieved according to the invention by method according to claim 1 or 2.

The tool used to hot-form a metal sheet according to the method of the invention comprises at least one upper former and a bottom former between which is disposed a metal sheet, said metal sheet being pressed between said formers in order to be formed. A formed area and a residual area are thus formed in said metal sheet during said forming.

The tool comprises cooling means for cooling the upper former and the bottom former, the metal sheet being cooled when it is formed between said cooled formers. Said tool also comprises actuating means, said actuating means generating at least one notch in said metal sheet between the formed area and the residual area when said actuating means act on said metal sheet.

In this way, when the notch is generated in the metal sheet and said metal sheet is cooled, an area of rupture is generated that enables the separation between the formed area and the residual area, said metal sheet being possible to be cut or split by said area of rupture by one or more blows or mechanical cutting actions.

These and other advantages and preferred characteristics of the invention will be made evident in the light of the drawings and the detailed description thereof.

### DESCRIPTION OF THE DRAWINGS

Fig.1 shows a first embodiment of a tool for forming a metal sheet, according to a first embodiment of the method of the invention.
Fig.2 shows a metal sheet formed by the tool of Fig. 1.
Fig. 3 is a partial view of the formed metal sheet of Fig. 2.
Fig. 4 shows the actuating means of the tool of Fig. 1.
Fig. 5 shows a second embodiment of a tool for forming a metal sheet according to an alternative embodiment the method of the invention.
Fig. 6 shows the forming of a metal sheet by the tool of Fig. 5.
Fig. 7 shows the actuating means of the tool of Fig. 5, acting on the metal sheet.
Fig. 8 shows an embodiment of a second tool where the formed metal sheet of Fig. 3 or FIG. 7 is cut or split.
Fig. 9 shows the hold-down plate of the second tool of Fig. 8, acting on the formed area of the metal sheet.
Fig. 10 shows the residual area of the formed metal sheet of Fig. 8, separated from the formed area.

### DETAILED DISCLOSURE OF THE INVENTION

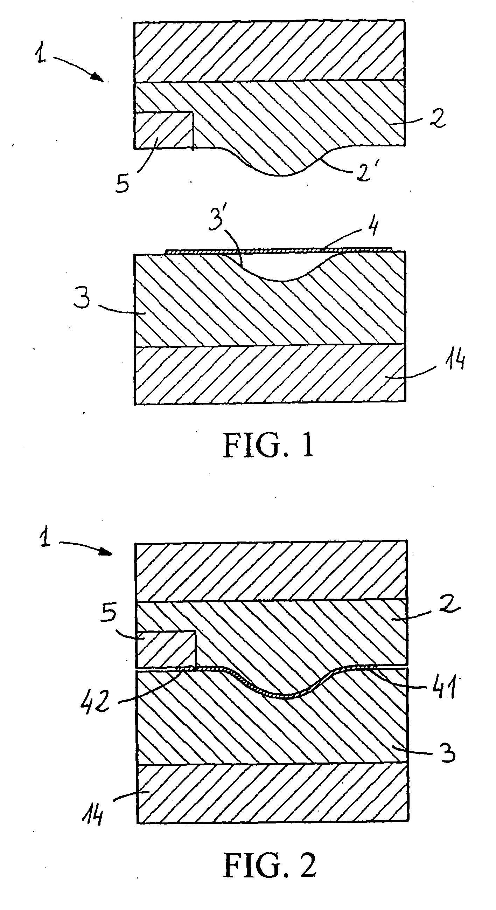

Figures 1 and 2 show a first embodiment of the tool 1 used for hot-forming a metal sheet 4. Said metal sheet 4 comprises properties such that after cooling an elevated hardness and breaking stress are obtained, such as, for example, martensitic steel.

The tool 1 comprises a work table 14, an upper former 2 with a forming surface 2' and a bottom former 3 with a forming surface 3', these forming surfaces 2' and 3' having a shape substantially equal to the shape that is to be obtained with the forming of said metal sheet 4, said upper former 2 acting, for example, as a male, and said bottom former 3 acting, for example, as a female. The metal sheet 4 is disposed between said formers 2 and 3 at high temperatures, such as 900°, for example, said metal sheet 4 being pressed between both formers 2 and 3 in order to be formed. Preferably, said metal sheet 4 is disposed on the bottom former 3, the upper former 2 being displaced towards said bottom former 3 in order to form said metal sheet 4. During said forming, on said metal sheet 4 a formed area 41 and a residual area 42 are formed, said formed area 41 corresponding to the piece to be obtained, and said residual area 42 corresponding to the surplus material, in relation to the piece to be obtained, of said metal sheet 4 on being formed.

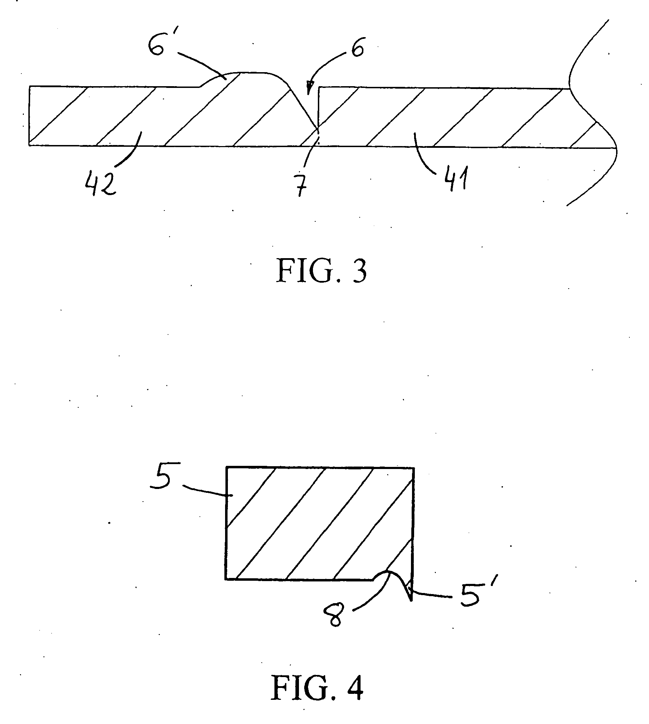

The tool 1 comprises cooling means (not shown in the figures) for cooling the upper former 2 and the bottom former 3. Thus, when said metal sheet 4 is hot-formed by said cooled formers 2 and 3, said metal sheet 4 is cooled during said forming. Said tool 1 also comprises actuating means 5 that generate at least one notch 6, shown in figure 3, in the metal sheet 4 between the formed area 41 and the residual area 42, when said actuating means 5 act on said metal sheet 4. With reference to figure 4, said actuating means 5 comprise at least one projection 5' with a substantially wedge-shaped form, said projection 5'acting on said metal sheet 4 and generating the notch 6. When said notch 6 is generated and when said metal sheet 4 is cooled by said cooled formers 2 and 3, an area of rupture 7 is generated in said metal sheet 4, between said formed area 41 and said residual area 42. In this way, the separation of the formed area 41 of said metal sheet 4 from the residual area 42 is enabled. On generating the notch 6, the thickness of the metal sheet 4 at said point is reduced, so that on being cooled and due to the properties of said metal sheet 4, said metal sheet 4 weakens at said point to generate the area of rupture 7.

Preferably the tool 1 also comprises a housing 8 where the surplus material 6' of the metal sheet 4 that is dislodged from the notch 6, when said notch 6 is generated is disposed. Thus, said surplus material 6' does not affect the end 5' of the actuating means 5, thereby increasing the useful life of said actuating means 5 and ensuring the geometry of the piece. Preferably said housing 8 is disposed in said tool 1 in such a way that it is disposed on the residual area 42 of the metal sheet 4 when said notch 6 is generated, or beneath said residual area 42. Thus, when it is housed in said housing 8, said surplus material 6' is disposed on said residual area 42 or beneath said residual area 42, thereby not affecting the formed area 41. Said housing 8 is disposed on the actuating means 5, adjacent to the projection 5' of said actuating means 5, although it can also be, for example, disposed on one of the formers 2, 3.

In the first embodiment shown in figures 1 and 2, the actuating means 5 are fixed to the upper former 2 and the bottom former 3 is fixed to the work table 14, remaining stationary. The projection 5' of said acting means 5 projects out of the forming surface 2' of said upper former 2, so that when said upper former 2 is displaced towards the bottom former 3 in order to form the metal sheet 4, said actuating means 5 are displaced towards said metal sheet 4, the notch 6 being generated and said metal sheet 4 being formed simultaneously.

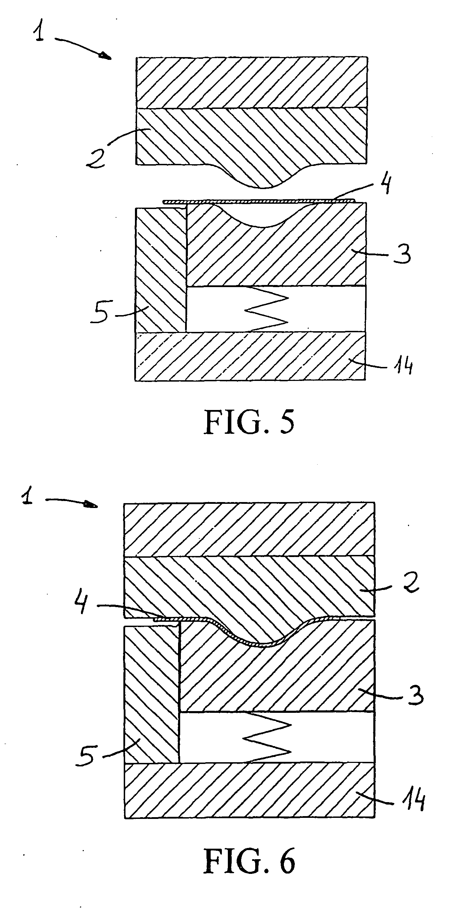

In a second embodiment, the actuating means 5 are independent of any of the formers 2, 3, enabling the generation of the notch 6 in the metal sheet 4 once said metal sheet 4 has been formed. With reference to figures 5, 6 and 7, said actuating means 5 may be fixed to the work table 14, remaining stationary. In a first step, at least one of the formers 2 and 3 is displaced in order to form said metal sheet 4, both formers 2 and 3 being displaced towards said actuating means 5 in a second step, said actuating means 5 generating said notch 6 in said metal sheet 4 after said metal sheet 4 has been formed. In the same way, said actuating means 5 may be connected to the upper former 2, for example, said actuating means 5 thereby being displaced in relation to said upper former 2 in order to generate said notch 6, once said metal sheet 4 has been formed.

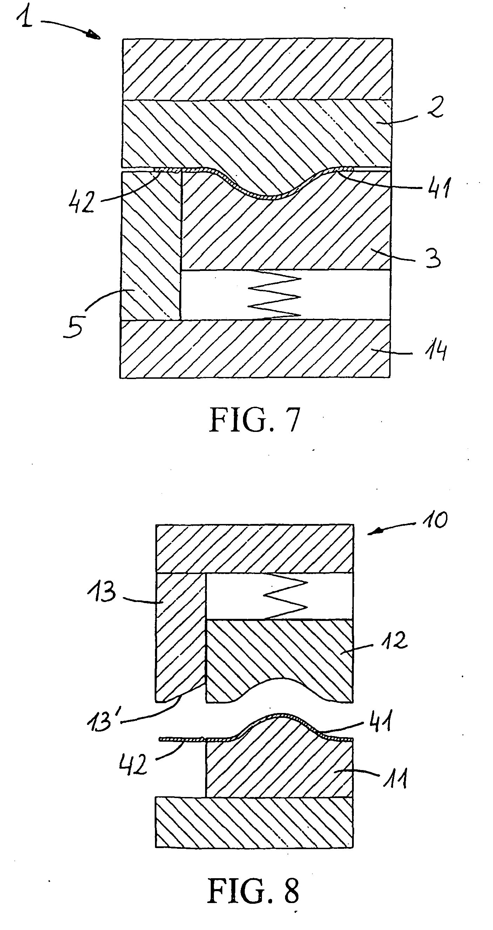

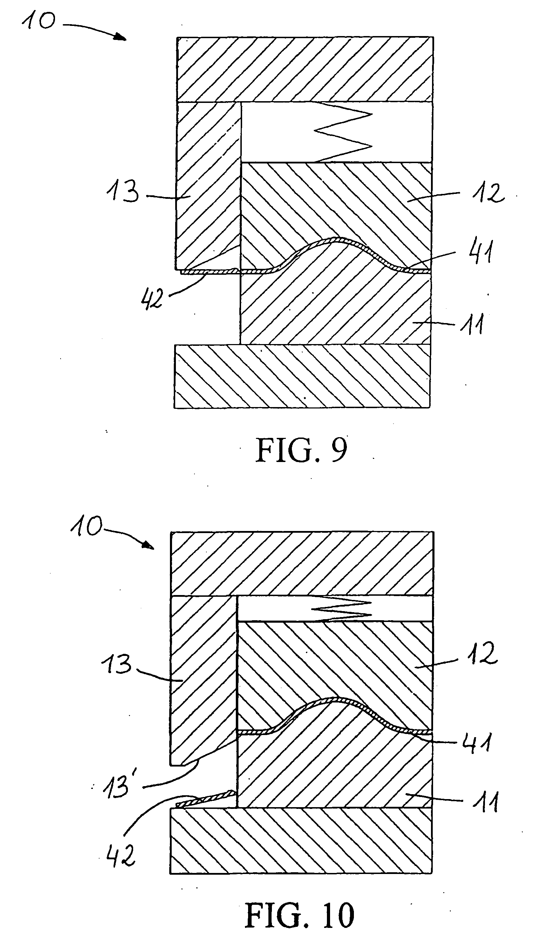

Once the notch 6 has been generated and the metal sheet 4 cooled, said metal sheet 4 is taken to a second tool 10 shown in Figures 8, 9 and 10, in order to separate the formed area 41 of the metal sheet 4 from the residual area 42 of said metal sheet 4, said residual area 42 being disposed of. Said second tool 10 comprises a support 11 upon which the formed area 41 of said metal sheet 4 is disposed, and at least one hold-down plate 12 that holds said metal sheet 4 on said support 11, pressing on said formed area 41, said support 11 and said hold-down plate 12 comprising a shape substantially equal to the shape of said formed area 41 (the required piece). Said second tool 10 also comprises a pusher 13 that knocks on the residual area 42 of said metal sheet 4 in order to separate said formed area 41 from said residual area 42, cutting or splitting the metal sheet 4 at the area of rupture 7, said residual area 42 being disposed of. Said pusher 13 may have, for example, an angled surface 13' that knocks on said residual area 42, said knocking enabling said metal sheet 4 to be cut or split at said area of rupture 7.

## Claims

1. Method for hot-forming a metal sheet in a tool (1), said tool comprising at least one upper former (2) and one bottom former (3) with respective forming surfaces (2',3') between which is disposed a metal sheet (4), said metal sheet (4) being pressed between said formers (2,3) in order to be formed, a formed area (41) and a residual area (42) being obtained on said metal sheet (4) during said forming, **characterised in that** said tool (1) comprises cooling means for cooling the upper former (2) and the bottom former (3), said metal sheet (4) being cooled when it is formed by said cooled formers (2,3), and said tool (1) also comprises actuating means (5) that generate a notch (6) in the metal sheet (4) between the formed area (41) and the residual area (42) when they act on said metal sheet (4), said method comprising a single step in which at least one of the formers (2,3) is displaced, the metal sheet (4) being pressed between said formers (2,3), said metal sheet (4) being formed and the notch (6) being generated in said metal sheet (4) simultaneously.

2. Method for hot-forming a metal sheet in a tool (1), said tool comprising at least one upper former (2) and one bottom former (3) with respective forming surfaces (2',3') between which is disposed a metal sheet (4), said metal sheet (4) being pressed between said formers (2,3) in order to be formed, a formed area (41) and a residual area (42) being obtained on said metal sheet (4) during said forming, **characterised in that** said tool (1) comprises cooling means for cooling the upper former (2) and the bottom former (3), said metal sheet (4) being cooled when it is formed by said cooled formers (2,3), and said tool (1) also comprises actuating means (5) that generate a notch (6) in the metal sheet (4) between the formed area (41) and the residual area (42) when they act on said metal sheet (4), the method comprising a first step in which at least one of the formers (2,3) is displaced the metal sheet (4) being pressed between said formers (2,3), said metal sheet (4) being formed in said first step, said method comprising a second step wherein the actuating means (5) act on said metal sheet (4), the notch (6) being generated in said metal sheet (4) in said second step.

## Patentansprüche

1. Verfahren zum Warmformen eines Blechs in einem Werkzeug (1), wobei das Werkzeug mindestens einen oberen Former (2) und einen unteren Former (3) mit entsprechenden Formflächen (2', 3') umfasst, zwischen denen ein Blech (4) angebracht ist, wobei das Blech (4) zwischen den Formern (2, 3) gepresst wird, um geformt zu werden, wobei auf dem Blech (4) während der Formung ein geformter Bereich (41) und ein Restbereich (42) erhalten wird, **dadurch gekennzeichnet, dass** das Werkzeug (1) Kühlmittel umfasst, um den oberen Former (2) und den unteren Former (3) zu kühlen, wobei das Blech (4) gekühlt wird, wenn es durch die gekühlten Former (2, 3) geformt wird, und das Werkzeug (1) auch Betätigungsmittel (5) umfasst, die eine Kerbe (6) im Blech (4) zwischen dem geformten Bereich (41) und dem Restbereich (42) bilden, wenn sie auf das Blech (4) wirken, wobei das Verfahren einen einzigen Schritt umfasst, in dem mindestens einer der Former (2, 3) verschoben wird, das Blech (4) zwischen den Formern (2, 3) gepresst wird das Blech (4) geformt wird und die Kerbe (6) in dem Blech (4) gleichzeitig erzeugt wird.

2. Verfahren zum Warmformen eines Blechs in einem Werkzeug (1), wobei das Werkzeug mindestens einen oberen Former (2) und einen unteren Former (3) mit entsprechenden Formflächen (2', 3') umfasst, zwischen denen ein Blech (4) angebracht ist, wobei das Blech (4) zwischen den Formern (2, 3) gepresst wird, um geformt zu werden, wobei auf dem Blech (4) während der Formung ein geformter Bereich (41) und ein Restbereich (42) erhalten wird, **dadurch gekennzeichnet, dass** das Werkzeug (1) Kühlmittel umfasst, um den oberen Former (2) und den unteren Former (3) zu kühlen, wobei das Blech (4) gekühlt wird, wenn es durch die gekühlten Former (2, 3) geformt wird, und das Werkzeug (1) auch Betätigungsmittel (5) umfasst, die eine Kerbe (6) im Blech (4) zwischen dem geformten Bereich (41) und dem Restbereich (42) bilden, wenn sie auf das Blech (4) wirken, wobei das Verfahren einen ersten Schritt umfasst, in dem mindestens einer der Former (2, 3) verschoben wird, das Blech (4) zwischen den Formern (2, 3) gepresst wird, wobei das Blech (4) in dem ersten Schritt geformt wird, wobei das Verfahren einen zweiten Schritt umfasst, wobei die Betätigungsmittel (5) auf das Blech (4) wirken, wobei die Kerbe (6) in dem Blech (4) in dem zweiten Schritt erzeugt wird.

## Revendications

1. Procédé pour formage à chaud d'une tôle métallique dans un outil (1), ledit outil comprenant au moins un gabarit supérieur (2) et un gabarit inférieur (3) avec des surfaces de formage respectives (2', 3') entre lesquelles est disposé une tôle métallique (4), ladite tôle métallique (4) étant pressée entre lesdits gabarits (2, 3) afin d'être formée, une zone formée (41) et une zone résiduelle (42) étant obtenues sur ladite tôle métallique (4) pendant ledit formage, **caractérisé en ce que** ledit outil (1) comprend des moyens de refroidissement pour refroidissement du gabarit supérieur (2) et du gabarit inférieur (3), ladite tôle métallique (4) étant refroidie lorsqu'elle est formée par lesdits gabarits refroidis (2, 3), et ledit outil (1) comprend en outre des moyens d'actionnement (5) qui génèrent une encoche (6) dans la tôle métallique (4) entre la zone formée (41) et la zone résiduelle (42) lorsqu'ils agissent sur ladite tôle métallique (4), ledit procédé comprenant une seule étape dans laquelle au moins l'un des gabarits (2, 3) est déplacé, la tôle métallique (4) étant pressée entre lesdits gabarits (2, 3), ladite tôle métallique (4) étant formé et l'encoche (6) étant générée dans ladite tôle métallique (4) simultanément.

2. Procédé pour formage à chaud d'une tôle métallique dans un outil (1), ledit outil comprenant au moins un gabarit supérieur (2) et un gabarit inférieur (3) avec des surfaces de formage respectives (2', 3') entre lesquelles est disposé une tôle métallique (4), ladite tôle métallique (4) étant pressée entre lesdits gabarits (2, 3) afin d'être formée, une zone formée (41) et une zone résiduelle (42) étant obtenues sur ladite tôle métallique (4) pendant ledit formage, **caractérisé en ce que** ledit outil (1) comprend des moyens de refroidissement pour refroidissement du gabarit supérieur (2) et du gabarit inférieur (3), ladite tôle métallique (4) étant refroidie lorsqu'elle est formée par lesdits gabarits refroidis (2, 3), et ledit outil (1) comprend en outre des moyens d'actionnement (5) qui génèrent une encoche (6) dans la tôle métallique (4) entre la zone formée (41) et la zone résiduelle (42) lorsqu'ils agissent sur ladite tôle métallique (4), le procédé comprenant une première étape dans laquelle au moins l'un des gabarits (2, 3) est déplacé, la tôle métallique (4) étant pressée entre lesdits gabarits (2, 3), ladite tôle métallique (4) étant formée dans ladite première étape, ledit procédé comprenant une deuxième étape dans laquelle les moyens d'actionnement (5) agissent sur ladite tôle métallique (4), l'encoche (6) étant générée dans ladite tôle métallique (4) dans ladite deuxième étape.
